# EUROPÄISCHE PATENTSCHRIFT

(11) **EP 0 593 975 B1**
(45) Veröffentlichungstag und Bekanntmachung des Hinweises auf die Patenterteilung: **19.03.1997**
(21) Anmeldenummer: 93116151.7
(22) Anmeldetag: 06.10.1993
(51) Int. Cl.: C08G 18/42, C08G 18/73, C08J 11/18

(54) **Verwendung thermoplastischer Poly(ester-urethane) als kompostierbare Kunststoffe**
Use of thermoplastic poly(ester-urethane) as a compostable plastic
Utilisation de poly(ester-uréthane) thermoplastique comme matière plastique compostable

(30) Priorität: 19.10.1992 DE 4235135
(43) Veröffentlichungstag der Anmeldung: 27.04.1994
(73) Patentinhaber: BAYER AG, 51368 Leverkusen (DE)
(72) Erfinder: Grigat, Ernst, Dr., D-51371 Leverkusen (DE); Dujardin, Ralf, Dr., D-47877 Willich-Anrath (DE); Völker, Michael, Dr., D-51061 Köln (DE); Zenner, Armin, Dr., D-41539 Dormagen (DE)

(56) Entgegenhaltungen:
- EP-A- 0 282 368
- BE-A- 856 398
- DATABASE WPI Week 8411, Derwent Publications Ltd., London, GB; AN 067231 ZAALISHVIL ET AL 'PREPARATION OF BIODEGRADABLE POLYURETHANE' & SU-A-1 016 314 (PHYSIOLOGY INST.) 7. Mai 1983
- DATABASE WPI Week 9327, Derwent Publications Ltd., London, GB; AN 216888 'FILM OF POLYESTER CONTAINING URETHANE BONDS' & JP-A-5 140 286 (SHOWA HIGH POLYMER) 8. Juni 1993
- DATABASE WPI Week 9322, Derwent Publications Ltd., London, GB; AN 177788 'FILM MOULDED USING POLYESTER CONTAINING URETHANE' & JP-A-5 105 736 (SHOWA HIGH POLYMER) 27. April 1993

## Beschreibung

Gegenstand der vorliegenden Erfindung ist die Verwendung thermoplastisch verarbeitbarer Poly(ester-urethane) als kompostierbare Kunststoffe, dadurch gekennzeichnet, daß die Polyurethane aus mindestens 75 Gew.-% aliphatischen Estersegmenten sowie aus aliphatischen Urethansegmenten bestehen und eine mittlere Molmasse (Mₙ) von 20.000 bis 100.000 aufweisen.

Ein aktuelles Problem ist die Entsorgung kleiner, oft mit kompostierbaren Rückständen verunreinigten, Behälter, beispielsweise Probepackungen der Lebensmittel- oder Kosmetikindustrie, gemischte Haushaltsabfälle, Blister und andere Verbundverpackungen von Kunststoff mit Papier oder Pappe, Folienreste und ähnliches. Ein Sammeln und Sortieren zum stofflichen Recycling ist weder wirtschaftlich noch überhaupt technisch zufriedenstellend durchführbar. Einen Ausweg bieten hier postierbare Kunststoffe, die zusammen mit den kompostierbaren Verunreinigungen ohne weitere Sortierungs- oder Reinigungsschritte stofflich verwertet werden können. Die Kompostierung von Kunststoffen wird in der Verpackungsverordnung ausdrücklich als stoffliches Recycling zugelassen.

Unter Kompostierung im erfindungsgemäßen Sinn wird ein quantitativer biologischer Abbau und Umwandlungsprozeß des erfindungsgemäßen Polymeren verstanden, der vorwiegend durch Bakterien wie beispielsweise Actinomyceten und Pilze wie beispielsweise Vertreter der Gattungen Aspergillus, Penicillium, Mucor sowie Hefen bewirkt wird. Voraussetzung dazu ist ein aerobes Milieu mit ausreichender Feuchtigkeit. An den erfindungsgemäß zu postierenden Kunststoff werden daher mehrere fundamentale Anforderungen gestellt. Er muß vollständig und rückstandslos mineralisiert, zu CO₂ und Wasser oder zu Biomasse (Lebendmasse) umgewandelt werden. Sowohl der Stoff als auch alle Metaboliten und Abbauprodukte müssen toxikologisch und ökotoxikologisch unbedenklich sein. Der erfindungsgemäße Kunststoff muß unter Gebrauchsbedingungen während der Gebrauchsdauer stabil sein und soll auch die für den Gebrauch erforderlichen technischen Eigenschaften besitzen.

Die Aufgabenstellung, die zu der vorliegenden Erfindung führt, bestand in dem Auffinden oder Entwicklung eines Materials, das diese widersprüchlichen Anforderungen erfüllt.

Die Lösung der Aufgabe gelang durch den Einsatz aliphatischer thermoplastischer Poly(ester-urethane). Die gute Kompostierbarkeit ist deshalb überraschend, weil aus der Literatur bekannt ist, daß die aliphatischen Poly(ester-urethane) deutlich resistenter gegenüber bakteriellem Befall sind als die teilaromatischen Poly(ester-urethane) (R.T. Darby, A. M. Kaplan, "Fungal Suszeptibility of Polyurethanes", Appl. Microbiol. 16 (1968) S. 900-905). Vom Einsatz der üblichen aromatischen Diisocyanate (Toluylendiisocyanat bzw. Diisocyanatodiphenylmethan) wurde abgesehen, da die Freisetzung der entsprechenden Diamine (Toluylendiamin bzw. Diaminodiphenylmethan) unter den Kompostierungsbedingungen befürchtet wird. Sowohl Toluylendiamin-haltige als auch Diaminodiphenylmethan-haltige Stoffe oder Zubereitungen werden nach Anhang II der GefStV (in der Fassung der Bekanntmachung vom 25. Sept. 1991; BGBl. I, S. 1931) ab einem Massegehalt von > = 1 Gew.-% als krebserzeugnder Gefahrstoff Gruppe III (gefährdend) eingestuft.

Thermoplastisch verarbeitbare kompostierbare Kunststoffe aus vollsynthetischen Rohstoffen sind bekannt, z.B. DE-A 4 208 360. Jedoch gehören Polyurethane bisher nicht dazu.

Eine repräsentative Übersicht über den Stand der Technik bezüglich der Polyurethane gibt die folgende Literaturzusammenstellung:

Thermoplastische Polyurethan-Elastomere auf der Grundlage von Polyisocyanaten, Polyhydroxylverbindungen und Kettenverlängerungsmitteln werden aufgrund ihrer hervorragenden physikalischen Eigenschaften seit Jahren für die unterschiedlichsten Einsatzzwecke verwendet. Eine ausführliche Beschreibung dieser Substanzklasse findet sich z.B. im Kunststoff-Handbuch, Band VII, Vieweg-Höchtlen, Carl Hanser Verlag. Die Verkompostierung wird in der Literatur jedoch nicht gelehrt.

Verschiedene Naturstoffe, die auch Esterkomponenten enthalten können, werden mit zweifach oder mehrfach funktionellen Isocyanaten zu Produkten umgesetzt, die biologisch abbaubar sein sollen (siehe beispielsweise Huang, Bell, Knox, Atwood, Leong, Natarajan, Pavlisko, Roby, Shoemaker in ACS Symp. Ser. 49 (1977), S. 73 oder DE 4 024 364 oder Singh, Talukder, Singh in J. Polym. Mater. 8 (1991), S. 275 oder Nakamura, Morck, Reimann, Kringsstad, Hatakeyama in Polym. Adv. Tech. 2 (1991), S. 41). Dabei wird die gute biologische Abbaubarkeit der Naturstoffe selbst genutzt. Bei den erfindungsgemäßen Poly(ester-urethanen) handelt es sich jedoch um ein trotz der vollsynthetischen Rohstoffquelle kompostierbares Material.

In der Literatur werden ebenfalls biologisch abbaubare Gemische bzw. Legierungen von Polyurethanen mit anderen, biologisch abbaubaren, Materialien wie beispielsweise Zelloluse (siehe beispielsweise DE 4 009 758) oder Stärke (siehe beispielsweise GB 1 524 821) oder biologisch abbaubaren synthetischen Polymeren wie beispielsweise Polycaprolacton und anderen Bestandteilen (siehe beispielsweise EP 282 368 oder Bruin, Veenstra, Nijenhuis, Pennings in Makromol. Chem., Rapid Comm. 9 (1988), S. 589). Die biologische Abbaubarkeit oder gar Kompostierbarkeit der reinen Polyurethankomponenten wird nicht gelehrt. Ein wesentlicher Vorteil der erfindungsgemäßen Poly(ester-urethane) gegenüber den Mischungen ist gerade die Tatsache, daß eine Initiierung der Kompostierbarkeit durch Versetzen mit abbaubaren Zuschlägen nicht notwendig ist.

Mit anderen abbaubaren funktionellen Gruppen wie beispielsweise Azogruppen in der Hauptkette (siehe beispielsweise EP 398 472) oder Phospholipidgruppen in der Seitenkette (siehe beispielsweise Shi, Wang, Leong in Polym. Prepr. 31 (2) (1990), S. 177) lassen sich Polyurethane zum Zweck der leichteren Abbaubarkeit, gegebenenfalls auch für spezielle Anwendungen, modifizieren. Das ist bei den erfindungsgemäßen Poly(ester-urethanen) zum erfindungsgemäßen Zweck der Kompostierung nicht notwendig.

Der Abbau von Poly(ester-urethanen) unter physiologischen Bedingungen wurde in Pufferlösung und in vivo bereits untersucht. (Behrend in Plaste Kautsch. 37 (1990), S. 194). Als Prüfbedingung wurde, wie im medizinischen Bereich allgemein üblich, die Hydrolyse in Phosphatpuffer bzw. der Einsatz als Implantat gewählt. Eine Kompostierbarkeit ist daraus nicht abzuleiten, da im Kompost wie bereits beschrieben völlig andere Bedingungen vorherrschen und die Ergebnisse nicht übertragbar sind.

Die Empfindlichkeit von auf Poly(caprolacton)diolen basierenden Polyurethanen gegenüber bestimmten Mikroorganismen ist bekannt (siehe Huang, Macri, Roby, Benedict in ACS Symp. Ser. 172 (1981), S. 471). Eine Kompostierbarkeit der erfindungsgemäßen Poly(ester-urethane) ist daraus jedoch nicht abzuleiten, weil sich die erfindungsgemäßen Poly(ester-urethane) chemisch signifikant unterscheiden. Außerdem wurde die Einwirkung isolierter Mikroorganismen auf den Kunststoff unter idealisierten Laborbedingungen getestet. Die bereits beschriebene im Kompost vorliegende biologische Umgebung unterscheidet sich von diesen Testbedingungen signifikant.

Aus der Literatur war, wie an einigen Beispielen dargestellt wurde, nicht zu erwarten, daß thermoplastisch verarbeitbare Poly(ester-urethane) die hohen Anforderungen, die eine rückstandlose und toxikologisch unbedenkliche Kompostierung an einen Kunststoff stellen, erfüllen.

Die Erkenntnis, daß die aliphatischen Poly(ester-urethane) diesen Anforderungen dennoch gerecht werden, ist neu. Überraschend ist vor allem, daß weder Naturstoffe noch besonders abbaufördernde Substanzen für die Synthese notwendig sind, sondern daß sie aus handelsüblichen, in großen Mengen verfügbaren, Rohstoffen herstellbar sind und ausreichende technische Eigenschaften aufweisen.

Die erfindungsgemäß als kompostierbare thermoplastische Kunststoffe verwendbaren Poly(ester-urethane) bestehen aus mindestens 75 Gew.-% aliphatischen Estersegmenten sowie aus aliphatischen oder cycloaliphatischen Urethansegmenten, haben eine mittlere Molmasse (Mₙ) von 20.000 bis 100.000 und weisen die durch ein Testverfahren charakterisierte Eigenschaft der Kompostierbarkeit auf.

Die Estersegmente der erfindungsgemäßen Poly(ester-urethane) können bestehen aus Oligoestern mit mehreren, bevorzugt zwei, Hydroxylendgruppen mit Mn (Zahlenmittel) von 500 bis 10 000, bevorzugt 1 000 bis 4 000, die vorzugsweise beispielsweise durch literaturbekannte Umsetzungen wie beispielsweise die Schmelzkondensation in Anwesenheit von Katalysatoren wie beispielsweise Titantetrabutylat aus mehrwertigen, vorzugsweise zweiwertigen und gegebenenfalls zusätzlich dreiwertigen Alkoholen mit mehrwertigen, vorzugsweise zweiwertigen und gegebenenfalls zusätzlich dreiwertigen Carbonsäuren hergestellt wurden. Anstelle der freien Carbonsäuren können auch die entsprechenden Carbonsäurechloride, Carbonsäureanhydride oder Carbonsäureester niederer Alkohole zur Herstellung dieser Oligoester verwendet werden.

Die mehrwertigen Alkohole können aliphatischer oder cycloaliphatischer Natur sein. Als Beispiele hierfür seien genannt: Ethylenglykol, Propylenglykol-1,3, Pentandiol-1,5, Butandiol-1,4, Hexandiol-1,6, Neopentylglykol oder Cyclohexandimethanol. Die Alkohole können auch miteinander gemischt eingesetzt werden.

Die mehrwertigen Dicarbonsäuren können aliphatischer oder cycloaliphatischer, bevorzugt linearer aliphatischer Natur sein. Besonders bevorzugt ist Adipinsäure.

Durch die Wahl des definierten Alkoholüberschusses wird der Gehalt an Hydroxyl-Endgruppen und damit das "mittlere Molgewicht" vorgegeben. Dieses ist durch Bestimmung der "OH-Zahl" ermittelbar.

Die genannten erfindungsgemäß verwendbaren Oligoester können alleine oder im Gemisch mit anderen Oligoestern aus der Gruppe der genannten erfindungsgemäß verwendbaren Oligoester eingesetzt werden.

Bei den zur Herstellung der erfindungsgemäßen verwendbaren Poly(ester-urethane) einzusetzenden Isocyanaten handelt es sich um aliphatische oder cycloaliphatische mehrwertige, bevorzugt zweiwertige, Isocyanate, bevorzugt Isophorondiisocyanat, Bis(4-isocyanatocyclohexyl)methan oder besonders bevorzugt Hexamethylendiisocyanat, wobei das Verhältnis von Isocyanat zu der Summe aller zerewitinowaktiven Gruppen 0,98 bis 1,05 beträgt.

Als Kettenverlängerer werden aliphatische und/oder cycloaliphatische mehrwertige, bevorzugt zweiwertige Alkohole wie beispielsweise Ethylenglykol, Propylenglykol-1,3, Pentandiol-1,5, Butandiol-1,4, Hexandiol-1,6, Neopentylglykol und/oder Cyclohexandimethanol eingesetzt.

Die erfindungsgemäße Eigenschaft der Kompostierbarkeit wird wie folgt definiert:
Die zu testenden Polymere werden in einem Flüssigmedium nach ASTM G 22 (Zusammensetzung Tab. 1) mit einer Mischung von Mikroorganismen aus Gartenkompost unter Schwenken (220 upm) und Luftzutritt bei 37°C inkubiert. Hierzu wird ca. 1 g des Polymeren in mehreren cm²-großen Stücken in 250 ml Nährsalz-Lösung in 1 l Erlenmeyerkolben mit 2 ml einer Suspension von 10 g Gartenkompost in 100 ml Nährsalzlösung beimpft. Aus der Kompostsuspension werden vorher grobe Teile über ein Feinsieb abgetrennt. Die Trockensubstanz (TS)-Gehalt der Animpfmenge beträgt dann ca. 50 mg. Als Kontrolle zur Messung des abiotischen Gewichtsverlusts der Polymerprobe wird ein Ansatz mit HgCl₂ (500 mg/l) versetzt. Weitere Kontrollansätze enthalten Cellulose (4 g/l, Typ DP 500, Fa. Wolff Walsrode) zur Überprüfung des Wachstums mit einem natürlichen Substrat bzw. werden ohne Zusatz einer C-Quelle zur Bestimmung des Hintergrundwachstums und der TS-Abnahme des Inokulums angesetzt.

**Tabelle 1**

| Zusammensetzung der Nährsalzlösung nach ASTM G22 | |
|---|---|
| KH₂PO₄ | 0,7 g |
| K₂HPO₄ | 0,7 g |
| MgSO₄^{·}7H₂O | 0,7 g |
| NH₄NO₃ | 1,0 g |
| NaCl | 0,005 g |
| FeSO₄^{·}7H₂O | 0,002 g |
| ZnSO₄^{·}7H₂O | 0,002 g |
| MnSO₄^{·}H₂O | 0,001 g |
| H₂O dest. | 1000,0 ml |

Zur Bestimmung des TS-Gehaltes der wasserunlöslichen Anteile (Polymer bzw. Polymerreste, Biomasse und Inokulum) wird der gesamte Inhalt eines Kolbens abzentrifugiert, einmal in 0,05 M Phosphatpuffer gewaschen und der unlösliche Rest bei 80° C mindestens 48 h getrocknet. In Parallelkolben wird die Biomasse und das reine Inokulum bestimmt. Durch Subtraktion dieser Meßgrößen kann der Anteil der Polymerreste errechnet werden.

Zur Messung der Biomasse wird ebenfalls der gesamte Inhalt eines Kolbens aufgearbeitet. Hierzu wird eine Modifizierung der Adenosintriphosphat(ATP)-Bestimmung der Firma Lumac-3M verwendet: 10 Minuten nach der Zugabe des Reaktivreagenzes (Lumac) werden 2,5 ml einer 33 %igen Tetrabutylammoniumhydroxydlösung zugegeben. Dies führt zu einer vollständigen ATP-Freisetzung aus der gesamten Biomasse innerhalb von 30 Sekunden. Nach dieser Zeit kann der ATP-Gehalt mit der üblichen Luciferin/Luciferase-Reaktion nach Angaben von Lumac bestimmt werden. Zur Korrelation des ATP-Gehaltes mit der Trockensubstanz wird eine 24 h-Kultur von Kl. planticola mitgemessen, deren ATP/TS-Verhältnis vorher bestimmt wird.

Als gut kompostierbar im erfindungsgemäßen Sinn werden alle Proben bezeichnet, die unter den oben genannten Bedingungen innerhalb von maximal zwei Wochen ein Biomassewachstum auf dem Polymeren von mindestens 30 mg/l ermöglichen.

Nicht kompostierbar im erfindungsgemäßen Sinn sind Proben, die unter den oben genannten Bedingungen innerhalb von maximal 2 Wochen ein Biomassewachstum von höchstens 5 mg/l ermöglichen.

Die erfindungsgemäß als kompostierbare thermoplastisch verarbeitbare Kunststoffe verwendbaren Poly(ester-urethane) können auch mit den üblichen Additiven, wie sie beispielsweise ausführlich in u.a. Rubber Chem. Technol. 47 (1974), Nr. 4, S. 949 bis 959; Angew. Makromol. Chem. 56 (1976), Nr. 828, S. 121 bis 138, Kunststoffe 67 (1977), Nr. 3, S. 151 bis 153; den DE-A 15 95 699, 23 02 654, 24 12 591, 24 54 891 und 27 02 661 sowie den entsprechenden Merkblättern der Herstellerfirmen wie beispielsweise Bayer AG, Ciba-Geigy, Sandoz oder Monsanto beschrieben sind, versetzt werden, wobei bei der Wahl der Additive auf den Erhalt der Kompostierbarkeit und auf niedrige Toxizität und Ökotoxizität zu achten ist.

Die erfindungsgemäß als kompostierbare thermoplastisch verarbeitbare Kunststoffe verwendbaren Poly(ester-urethane) können, alleine oder mit den genannten Additiven versetzt, mit üblichen Füll- oder Verstärkungsstoffen gefüllt werden, wobei auch hierbei darauf zu achten ist, daß die Kompostierbarkeit nicht beeinträchtigt wird und die Füll- oder Verstärkungsstoffe bodenverträglich oder kompostierbar sind. Solche Füll- oder Verstärkungsstoffe sind beispielsweise Zellulose, Zellulosederivate, Stärke Kieselgel oder Talk.

Die erfindungsgemäßen Copolymeren können beispielsweise zu elastischen bis steifen Formkörpern wie Erdauswaschhindernissen vor einer Hangbepflanzung (die nach dem Anwachsen der Pflanzen vollständig abgebaut werden sollen), Blumentöpfen für Setzlinge, Kranz- und Blumenbindehilfsmitteln, Grablichtumhüllungen oder Tragegriffen; zu Folien für Verpackungszwecke oder Mulchfolien für landwirtschaftliche Zwecke, oder zu Bändern verarbeitet werden.

### Beispiele

### Beispiel 1

303,2 g eines hydroxylterminierten Oligoesters aus Adipinsäure und Butandiol mit einer mittleren Molmasse von 2020 g/mol und 117,4 g eines hydroxylterminierten Oligoesters aus Ethylenglykol und Adipinsäure mit einer mittleren Molmasse von 1957 g/mol werden auf 140° C erhitzt und 30 Minuten im Vakuum entgast. Dazu gibt man dann 10,8 g Butandiol-1,4 und entgast weitere 10 Minuten bei 140° C. Danach werden 0,1 g Dibutylzinndilaurat und 57,2 g Hexamethylendiisocyanat zugegeben und schnell bis zum Zähwerden gerührt. Die Masse wird auf ein Blech ausgegossan und 10 Stunden bei 100° C getempert.

Man erhält ein weißes, flexibles Material, das bei den im Text angegebenen Testbedingungen nach zwei Wochen mindestens 65 mg/l Biomassewachstum ermöglicht.

### Beispiel 2

267,0 g eines hydroxylterminierten Oligoesters aus Adipinsäure und Hexandiol/Neopentylglykol (Molverhältnis 3 : 1) mit einer mittleren Molmasse von 1780 g/mol und 117,4 g eines hydroxylterminierten Oligoesters aus Ethylenglykol und Adipinsäure mit einer mittleren Molmasse von 1957 g/mol werden auf 140° C erhitzt und 30 Minuten im Vakuum entgast. Dazu gibt man dann 10,8 g Butandiol-1,4 und entgast weitere 10 Minuten bei 140° C. Danach werden 0,1 g Dibutylzinndilaurat und 57,2 g Hexamethylendiisocyanat zugegeben und schnell bis zum Zähwerden gerührt. Die Masse wird auf ein Blech ausgegossen und 10 Stunden bei 100° C getempert.

Man erhält ein helles, flexibles Material, das bei den im Text angegebenen Testbedingungen nach zwei Wochen mindestens 60 mg/l Biomassewachstum ermöglicht.

### Beispiel 3

339,9 g eines hydroxylterminierten Oligoesters aus Adipinsäure und Hexandiol mit einer mittleren Molmasse von 2266 g/mol und 117,4 g eines hydroxylterminierten Oligoesters aus Ethylenglykol und Adipinsäure mit einer mittleren Molmasse von 1957 g/mol werden auf 140° C erhitzt und 30 Minuten im Vakuum entgast. Dazu gibt man dann 17,3 g Cyclohexandimethanol-1,4 und entgast weitere 10 Minuten bei 140° C. Danach werden 0,1 g Dibutylzinndilaurat und 57,2 g Hexamethylendiisocyanat zugegeben und schnell bis zum Zähwerden gerührt. Die Masse wird auf ein Blech ausgegossen und 10 Stunden bei 100° C getempert.

Man erhält ein helles, flexibles Material, das bei den im Text angegebenen Testbedingungen nach zwei Wochen mindestens 50 mg/l Biomassewachstum ermöglicht.

## Patentansprüche

1. Verwendung thermoplastisch verarbeitbarer Poly(ester-urethane) als kompostierbare Kunststoffe, dadurch gekennzeichnet, daß die Polyurethane aus mindestens 75 Gew.-% aliphatischen Estersegmenten sowie aus aliphatischen Urethansegmenten bestehen und eine mittlere Molmasse (Mₙ) von 20.000 bis 100.000 aufweisen, wobei die Proben als kompostierbar bezeichnet werden, die unter den Bedingungen gemäß ASTM G22 innerhalb von 2 Wochen ein Biomassewachstum auf dem Polymeren von mindestens 30 mg/l ermöglichen.

2. Verwendung nach Anspruch 1, dadurch gekennzeichnet, daß die Estersegmente der Poly(ester-urethane) aus hydroxyterminierten Oligostern mit Mₙ (Zahlenmittel) von 500 bis 10 000 bestehen, die aus mehrwertigen Alkoholen mit mehrwertigen Carbonsäuren hergestellt wurden, wobei die mehrwertigen Alkohole und die mehrwertigen Dicarbonsäuren aliphatischer oder cycloaliphatischer Natur sind.

3. Verwendung nach Anspruch 1, dadurch gekennzeichnet, daß die Urethansegmente der Poly(ester-urethane) aus aliphatischen oder cycloaliphatischen Isocyanaten sowie aliphatischen oder cycloaliphatischen Alkoholen als Kettenverlängerern aufgebaut werden.

## Claims

1. Use of thermoplastically processible poly(ester urethanes) as compostable plastics, characterised in that the polyurethanes consist of at least 75 wt.% of aliphatic ester segments and of aliphatic urethane segments and have an average molar mass (Mₙ) of from 20,000 to 100,000, wherein the samples which enable a biomass growth on the polymer of at least 30 mg/l to be achieved within 2 weeks under the conditions according to ASTM G22 are described as compostable.

2. Use according to claim 1, characterised in that the ester segments of the poly(ester urethanes) consist of hydroxyl terminated oligoesters having an Mₙ value (number average) of from 500 to 10,000 which have been prepared from polyhydric alcohols with polybasic carboxylic acids, which polyhydric alcohols and polybasic dicarboxylic acids are aliphatic or cycloaliphatic.

3. Use according to claim 1, characterised in that the urethane segments of the poly(ester urethanes) are built up from aliphatic or cycloaliphatic isocyanates and aliphatic or cycloaliphatic alcohols as chain lengthening agents.

## Revendications

1. Utilisation de poly(ester-uréthannes) aptes à un traitement thermoplastique, comme matières synthétiques compostables, caractérisée en ce que les polyuréthannes sont constitués, à concurrence d'au moins 75% en poids, par des segments d'esters aliphatiques, ainsi que par des segments d'uréthannes aliphatiques et présentent une masse molaire moyenne (Mₙ) de 20.000 à 100.000, les échantillons considérés comme compostables étant ceux qui permettent, dans les conditions selon la norme ASTM G22, dans un laps de temps de 2 semaines, une croissance de la biomasse sur le polymère d'au moins 30 mg/l.

2. Utilisation selon la revendication 1, caractérisée en ce que les segments d'esters des poly(ester-uréthannes) sont constitués par des oligo-esters à terminaisons hydroxyle possédant une Mₙ (moyenne en nombre) de 500 à 10.000, que l'on a préparés à partir d'alcools polyvalents avec des acides carboxyliques polyvalents, les alcools polyvalents et les acides dicarboxyliques polyvalents étant de nature aliphatique ou cycloaliphatique.

3. Utilisation selon la revendication 1, caractérisée en ce que les segments d'uréthanne des poly(ester-uréthannes) sont constitués par des isocyanates aliphatiques ou cycloaliphatiques, ainsi que par des alcools aliphatiques ou cycloaliphatiques comme agents d'allongement de chaînes.
